Europäisches Patentamt

European Patent Office

Office européen des brevets

(11) Veröffentlichungsnummer: **0 046 504**

A1

(12) # EUROPÄISCHE PATENTANMELDUNG

(21) Anmeldenummer: 81105562.3

(22) Anmeldetag: 15.07.81

(51) Int. Cl.$^3$: **C 01 B 33/28**
**B 01 J 29/04**

(30) Priorität: 21.08.80 DE 3031557

(43) Veröffentlichungstag der Anmeldung:
03.03.82 Patentblatt 82/9

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Marosi, Laszlo, Dr.
Leuschnerstrasse 32
D-6700 Ludwigshafen(DE)

(72) Erfinder: Schwarzmann, Matthias, Dr.
Carl-Bosch-Strasse 54
D-6703 Limburgerhof(DE)

(72) Erfinder: Stabenow, Joachim, Dr.
Am Feldrain 22
D-6940 Weinheim(DE)

(54) **Kristalliner Metallsilikatzeolith ZBM-30 und Verfahren zu seiner Herstellung.**

(57) Die Anmeldung betrifft kristalline Metallsilikatzeolithe vom Typ ZBM-30 sowie Verfahren zur Herstellung dieser kristallinen Metallsilikatzeolithe.

Durch hydrothermale Kristallisation bei Temperaturen von 100 bis 200°C aus Mischungen von $YO_2$, worin Y die Elemente Silizium und Germanium, und $W_2O_3$, worin W die Elemente Bor, Aluminium, Eisen und Gallium bedeuten, mit Hilfe von organischen Aminen, wobei man in der Reaktionsmischung in Abhängigkeit von der Kettenlänge des organischen Amins ein zur Bildung des Zeoliths geeignetes bestimmtes Molverhältnis von $YO_2 : W_2O_3$ einstellt.

EP 0 046 504 A1

BASF Aktiengesellschaft                    O.Z. 0050/034622

Kristalliner Metallsilikatzeolith ZBM-30
und Verfahren zu seiner Herstellung
_____

Die Erfindung betrifft einen neuen kristallinen Zeolithen und ein Verfahren zu seiner Herstellung.

Die gebräuchlichsten Zeolithe des A-, X- und Y-Typs haben eine große technische Bedeutung erlangt. Sie werden als Ionenaustauscher, Molekularsiebe und Katalysatoren verwendet. Technische Verfahren, wie das katalytische und hydrierende Cracken von Kohlenwasserstoffen, werden mit Zeolithkatalysatoren durchgeführt. Neuerdings gewinnen Zeolithkatalysatoren auch für die Umwandlung von Methanol in Olefine und/oder Aromaten zunehmendes Interesse.

Zeolithe sind kristalline Silikate, insbesondere Aluminosilikate. Aluminosilikatzeolithe sind aus $SiO_4$- und $AlO_4$--Tetraedern aufgebaut. Die Verknüpfung der Tetraeder ist derart, daß im Kristallgitter große Hohlräume entstehen, die neben Kationen auch solche Moleküle aufnehmen können, deren Dimensionen kleiner sind als der Porendurchmesser selbst. Kationen und sorbierte Moleküle sind leicht austauschbar. Darauf beruht die Wirkung der Zeolithe als Ionenaustauscher, Adsorptionsmittel und Molekularsiebe. Ihre katalytische Wirkung in Kohlenwasserstoffumwandlungsreaktionen ist mit dem Vorhandensein von aciden Zentren verknüpft, die z.B. durch Austausch der Kationen gegen Protonen, gegen Cer oder gegen andere mehrwertige Kationen entstehen können.

Es wurden bisher eine große Zahl von Zeolithen synthetisch hergestellt. Wichtige Zeolithsorten und Verfahren zu ihrer Herstellung sind z.B. in US-PS 2 882 243 (Zeolith A), US-PS 3 130 007 (Zeolith Y) oder z.B. in der US-PS 3 702 886 (ZSM-5) beschrieben. Es sind auch
Gr/BL

gerüstsubstituierte Zeolithe bekannt, die an Stelle von Si Germanium, an Stelle von Aluminium Gallium, Bor, Beryllium oder Eisen enthalten. Solche Zeolithe sind beispielsweise beschrieben in US-PS 3 996 337.

Die vorliegende Erfindung betrifft neue kristalline Zeolithe vom Typ ZBM-30 und ein Verfahren zu ihrer Herstellung.

Die neuen Zeolithe ZBM-30 haben folgende Zusammensetzung:

$$\frac{2R}{n} \cdot W_2O_3 \cdot m \, YO_2 \cdot p \, H_2O,$$

worin R ein organisches Amin, n die Zahl der Amingruppen in dem Aminmolekül, W die Elemente B, Al, Fe und Ga, Y die Elemente Si und Ge bedeutet und p einen Wert von 0 bis 160, m einen Wert von $\geq$

$$\frac{96 - \dfrac{40 \, n}{L_R + K}}{\dfrac{5 \, n}{K_R + K}}$$

hat, worin $L_R$ die Länge des Aminmoleküls in $\overset{o}{A}$ bedeutet, und K eine Konstante mit dem Wert von etwa 4 ist.

Die neuen Zeolithe haben ein charakteristisches Röntgenbeugungsdiagramm, das mindestens folgende Beugungslinien aufweist:

| d ($\overset{o}{A}$) | I/I |
|---|---|
| 11,60 | 36 |
| 10,82 | 15 |
| 5,80 | 11 |
| 4,18 | 100 |
| 3,87 | 79 |
| 2,84 | 16 |

Die neuen Zeolithe ZBM-30 können als Adsorptionsmittel oder als Katalysatoren für die Umwandlung von Kohlenwasserstoffen und Alkoholen und/oder Äthern, z.B. zur Umwandlung von Olefinen in flüssige Kohlenwasserstoffe benutzt werden. Es ist vorteilhaft, die Katalysatoren oder Adsorptionsmitteln vor der Verwendung zumindest teilweise vom adsorbierten Wasser und Amin zu befreien. Dies kann z.B. durch Erhitzen auf 200 bis 700°C erfolgen. Durch Kalzinieren bei 500 bis 600°C entsteht die katalytisch aktive H-Form, die direkt als Katalysator eingesetzt werden kann. Die H-Form kann mit Hilfe bekannter Ionenaustauschtechniken teilweise oder ganz in andere Kationenformen umgewandelt werden.

Die neuen Zeolithe ZBM-30 kann man herstellen, indem man in Gegenwart von organischen Aminen und Wasser Mischungen von $W_2O_3$ und $YO_2$ auf Temperautren von 100 bis 200°C erhitzt, bis die Kristallisation eintritt. Das molare Verhältnis $YO_2/W_2O_3$ in der Reaktionsmischung soll dabei so gewählt werden, daß der kristalline Zeolith ein durch die obige Formel beschriebenes $YO_2/W_2O_3$-Molverhältnis besitzt. Im Falle von Aluminiumoxid und Siliziumdioxid ist es das durch die obige Formel berechnete Molverhältnis. Borsäure ist im Gegensatz zu $Al(OH)_3$ in Wasser löslich. Deshalb wird zweckmäßig in der Reaktionsmischung ein kleineres $SiO_2/B_2O_3$-Verhältnis verwendet als der Zusammensetzung des kristallinen Zeoliths entspricht. Die Konzentration

0046504

der übrigen Reaktionsteilnehmer soll in folgenden Bereichen der molaren Zusammensetzung liegen:

$$H_2O/Amin = 0,4 - 100 \text{ und}$$
$$Amin/Al_2O_3 = 5 \text{ bis } 100$$

Als organische Amine eignen sich insbesondere Di-, Tri- und Tetramine, beispielsweise Ethylendiamin, Propylendiamin, Hexamethylendiamin, Dipropylentriamin, Dihexamethylentriamin, Diethylentriamin oder Triethylentetramin. Es können aber auch andere Polyamine mit noch höherer Kettenlänge eingesetzt werden. Entscheidend dabei ist, daß die Zusammensetzung der Reaktionsmischung entsprechend der Formel in geeigneter Weise auf die Kettenlänge und Zahl der Amingruppen des Aminmoleküls abgestimmt ist.

Eine bevorzugte Ausführungsform der Erfindung besteht darin, Mischungen von reaktivem $SiO_2$ und $Al(OH)_3$ z.B. pyrogene Kieselsäure und frisch gefälltes Aluminiumhydroxid, in einer wäßrigen Lösung des Amins von vorzugsweise 10 - 70%iger Konzentration 0,5 bis 7 Tage, bevorzugt 1 bis 5 Tage auf Temperaturen zwischen 100 bis 200, bevorzugt 140 - 180°C, unter Eigendruck zu erhitzen. Bei der bevorzugten Ausführungsform wird die Synthese ohne Alkalizugabe durchgeführt.

Nach beendeter Kristallisation wird der entstandene Zeolith filtriert, gewaschen und getrocknet.

Die Herstellung der erfindungsgemäßen Zeolithe wird anhand der folgenden Beispiele näher erläutert.

## Beispiel 1

In 2000 g 50%ige wäßrige Lösung von Hexamethylendiamin werden 160 g pyrogene Kieselsäure und frisch gefälltes Aluminiumhydroxid homogen eingerührt. Das Aluminiumhydroxid wird aus 12,3 g $(Al(NO_3)_3 \cdot 9 H_2O$ durch Fällen mit Ammoniak hergestellt. Die Mischung wird dann in einem Stahlautoklaven 5 Tage auf 170°C erhitzt. Das kristalline Produkt wird filtriert, gewaschen und bei 100°C getrocknet. Laut Röntgenanalyse besteht das Produkt aus gut kristallisiertem Zeolith ZBM-30 mit folgenden Röntgenbeugungslinien:

| d ($\overset{o}{A}$) | I | d ($\overset{o}{A}$) | I |
|---|---|---|---|
| 11,60 | 36 | 3,56 | 6 |
| 10,02 | 15 | 3,40 | 5 |
| 7,08 | 5 | 3,35 | 7 |
| 6,05 | 6 | 3,06 | 3 |
| 5,80 | 11 | 2,84 | 16 |
| 4,18 | 100 | 2,09 | 8 |
| 3,87 | 79 | 2,07 | 4 |
| 3,60 | 4 | | |

## Beispiel 2

Es werden Mischungen von $SiO_2$ und $Al(OH)_3$ hergestellt und in der im Beispiel 1 beschriebenen Weise 100 g $SiO_2$ und die dem jeweiligen $SiO_2/Al_2O_3$-Molverhältnis entsprechende Menge $Al(OH)_3$ in 1200 g einer 50%iger Aminlösung aus verschiedenen Aminen 7 Tage bei 170°C hydrothermal behandelt. Das Ergebnis der Versuche ist in Abhängigkeit von Art des Amins und der Zusammensetzung der Reaktionsmischung in der folgenden Tabelle zusammengestellt:

Tabelle

| | $L_R$ (Å) | $\dfrac{96\frac{40\ n}{L_R+4}}{\frac{5\ n}{L_R+4}}$ | $SiO_2/Al_2O_3-$ Molverhältnis | Produkt |
|---|---|---|---|---|
| Dipropylentriamin | 12,0 | 94,2 | 80<br>800 | ZSM-5<br>ZBM-30 |
| Hexamethylendiamin | 10,7 | 133 | 90<br>200<br>reines $SiO_2$ | ZSM-5-<br>artig<br>ZBM-30 |
| Dihexamethylentriamin | 20,0 | 145,5 | 800 | ZBM-30 |
| Triethylentetramin | 13,4 | 75,6 | 25<br>120<br>reines $SiO_2$ | ZSM-5<br>ZBM-30<br>ZBM-30-<br>Typ |
| Propylendiamin | 6,7 | 94,8 | 50<br>120<br>130 | ZSM-5-<br>artig<br>ZBM-30<br>u. ZSM-5 |

Das Ergebnis zeigt, daß die kristallinen Zeolithe vom Typ ZBM-30 nur bei Einhaltung der Bedingungen gemäß Anspruch 2 oder 3 erhalten werden.

00465O4

Beispiel 3

Es werden zwei Mischungen aus $SiO_2$ und $B(OH)_3$ hergestellt und in einer 50%igen Hexamethylendiaminlösung 5 Tage bei $150^\circ C$ hydrothermal behandelt.

In 2000 g 50%ige Hexamethylendiaminlösung werden 160 g Aerosil und 1,5 g Borsäure eingetragen. Die Mischung wird dann jeweils so lange gerührt bis sie homogen ist und anschließend 5 Tage in einem Stahlautoklaven auf $150^\circ C$ erhitzt. Die Produkte werden filtriert, gewaschen und getrocknet. Laut Röntgenanalyse besteht das Produkt aus kristallisiertem Borzeolith vom Typ ZBM-30.

Patentansprüche

1. Kristalliner Metallsilikatzeolith vom Typ ZBM-30 der allgemeinen Formel

$$\frac{2R}{n} \cdot W_2O_3 \cdot m \, YO_2 \cdot p \, H_2O$$

worin R ein organisches Amin, n die Zahl der Amingruppen in dem Aminmolekül, W die Elemente B, Al, Fe und Ga, Y die Elemente Si und Ge bedeuten und p einen Wert von 0 bis 160, m einen Wert von $\geq$

$$\frac{96 - \dfrac{40 \, n}{L_R + K}}{\dfrac{5 \, n}{L_R + K}}$$

hat, worin $L_R$ die Länge des Aminmoleküls in Å bedeutet, und K eine Konstante mit dem Wert von etwa 4 ist.

2. Verfahren zur Herstellung von kristallinen Metallsilikat-Zeolithen nach Anspruch 1 aus Mischungen von $YO_2$ und $W_2O_3$ durch hydrothermale Kristallisation bei Temperaturen von 100 bis 200°C, dadurch gekennzeichnet, daß man die Kristallisation mit Hilfe von organischen Aminen durchführt und dabei in der Reaktionsmischung in Abhängigkeit von der Kettenlänge $L_R$ des organischen Amins ein zur Bildung des Zeoliths geeignetes Molverhältnis von $YO_2$ zu $W_2O_3$ einstellt, wobei die molaren Verhältnisse von $H_2O$/Amin im Bereich von 0,4 bis 100 und von Amin/$Al_2O_3$ im Bereich von 5 bis 400 liegen.

3. Verfahren zur Herstellung von kristallinen Aluminosilikatzeolithen nach Anspruch 1 aus Mischungen von $SiO_2$ und $Al(OH)_3$ durch hydrothermale Kristallisation bei Temperaturen von 100 bis 200°C, dadurch gekennzeichnet, daß man die Kristallisation mit Hilfe von organischen Aminen durchführt und dabei in der Reaktionsmischung in Abhängigkeit von der Kettenlänge $L_R$ des organischen Amins ein Molverhältnis von

$$SiO_2/Al_2O_3 \geqq \frac{96 - \dfrac{40\,n}{L_R+4}}{\dfrac{5\,n}{L_R+4}}$$

verwendet und die molaren Verhältnisse von $H_2O$/Amin im Bereich von 0,4 bis 100 und von Amin/$Al_2O_3$ im Bereich von 5 bis 400 liegen.

Nummer der Anmeldung

EP 81 10 5562.3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | EP - A1 - 0 007 081 (BASF AG) <br> * ganzes Dokument * <br> -- | 1,2,3 |
| A | US - A - 4 146 584 (L.D. ROLLMANN) <br> -- | |
| A | DE - A1 - 2 817 576 (MOBIL OIL CORP.) <br> -- | |
| A | EP - A1 - 0 000 669 (MOBIL OIL CORP.) <br> -- | |
| D,A | US - A - 3 702 886 (R.J. ARGAUER et al.) <br> ---- | |

**KLASSIFIKATION DER ANMELDUNG (Int. Cl.³)**

C 01 B 33/28
B 01 J 29/04

**RECHERCHIERTE SACHGEBIETE (Int Cl.³)**

C 01 B 33/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
   liegende Theorien oder
   Grundsätze
E: kollidierende Anmeldung
D: in der Anmeldung angeführtes
   Dokument
L: aus andern Gründen
   angeführtes Dokument
&: Mitglied der gleichen Patentfamilie, übereinstimmendes
   Dokument

Der vorliegende Recherchenbericht wurde für alle Patentansprüche erstellt.

| Recherchenort | Abschlußdatum der Recherche | Prüfer |
|---|---|---|
| Berlin | 27-10-1981 | ASSOGNA |